# FASCICULE DE BREVET EUROPEEN

(11) **EP 2 750 354 B1**
(45) Date de publication et mention de la délivrance du brevet: **13.03.2019**
(21) Numéro de dépôt: 13199619.1
(22) Date de dépôt: 26.12.2013
(51) Int. Cl.: H04L 29/06, G06F 21/72

(54) **Procédé de définition d'un module de filtrage, module de filtrage associé**
Verfahren zur Definition eines Filtermoduls, und entsprechendes Filtermodul
Method for defining a filtering module, related filtering module

(30) Priorité: 28.12.2012 FR 1203622
(43) Date de publication de la demande: 02.07.2014
(73) Titulaire: Thales, 92200 Neuilly Sur Seine (FR)
(72) Inventeur: Gureghian, Emmanuel Tigrane, 92622 GENNEVILLIERS CEDEX (FR); Duputz, Patrick, 92622 GENNEVILLIERS CEDEX (FR); Grisal, Olivier, 92622 GENNEVILLIERS CEDEX (FR)
(74) Mandataire: Lavoix

(56) Documents cités:
- US-A1- 2008 101 222
- US-A1- 2012 036 581
- HINRICHS S: "Policy-based management: bridging the gap", PROCEEDINGS / 15TH ANNUAL COMPUTER SECURITY APPLICATIONS CONFERENCE : DECEMBER 6 - 10, 1999, PHOENIX, ARIZONA, IEEE COMPUTER SOCIETY, LOS ALAMITOS, CALIF. [U.A.], 6 décembre 1999 (1999-12-06), pages 209-218, XP010368586, DOI: 10.1109/CSAC.1999.816030 ISBN: 978-0-7695-0346-2
- "CPA SECURITY CHARACTERISTIC IP FILTERING FIREWALLS Version 1.1", CESG UK, 1 janvier 2011 (2011-01-01), XP055084557, Extrait de l'Internet: URL:http://www.cesg.gov.uk/publications/Do cuments/sc_for_ip_filtering_firewalls.pdf [extrait le 2013-10-18]
- Basoti: "Stateful firewalls", , 31 July 2008 (2008-07-31), XP055293817, Retrieved from the Internet: URL:https://www.ief.uni-rostock.de/basoti/ material/basoti2008/ns/Mundt_NS_3_Stateful _Firewalls.pdf [retrieved on 2016-08-05]
- Frédéric Cuppens ET AL: "Handling Stateful Firewall Anomalies" In: "IFIP Advances in Information and Communication Technology", 1 January 2012 (2012-01-01), XP055423688, ISSN: 1868-4238 vol. 376, pages 174-186, DOI: 10.1007/978-3-642-30436-1_15,

## Description

La présente invention concerne le domaine de la sécurité des systèmes d'informations. Elle est relative, plus précisément, à la définition d'un module de filtrage adapté pour filtrer des informations selon une politique de sécurité déterminée, entre un premier module propre à traiter des informations d'un premier niveau de sensibilité, et un second module propre à traiter des informations d'un second niveau de sensibilité, lesdits premier et second modules étant reliés, en parallèle du module de filtrage, par un module cryptographique adapté pour appliquer des fonctions cryptographiques.

De tels modules de filtrages font notamment partie de systèmes présentant une architecture comprenant des modules de niveaux de sensibilité distincts et un module cryptographique. Dans de tels systèmes, on trouve notamment les équipements cryptographiques, tels que des chiffreurs.

Ces domaines de niveau de sensibilité distincts sont par exemple nommés module rouge et module noir. Le module rouge traite et stocke par exemple des informations sensibles, dites rouges, en clair. Le module noir traite et stocke par exemple des informations moins sensibles que les informations rouges. Ces informations moins sensibles, dites noires, sont soit des informations en clair, intrinsèquement moins sensibles que les informations rouges, soit des informations rouges chiffrées, intrinsèquement sensibles mais désensibilisées par chiffrement.

Le module rouge traite et comporte, en outre, des informations noires.

Usuellement, les informations qui ne sont identifiables ni comme informations rouges, ni comme informations noires, sont considérées comme informations rouges par défaut, au sein du module rouge

Usuellement, les informations qui ne sont identifiables ni comme informations rouges, ni comme informations noires, sont considérées comme informations noires par défaut, au sein du module noir.

Le module cryptographique implémente les fonctions cryptographiques nécessaires au chiffrement des informations rouges. Il est situé en coupure entre les modules rouge et noir. Les systèmes cryptographiques comprennent également deux interfaces externes : une première interface ou interface utilisateur ou interface réseau privé, reliée au module rouge, et une seconde interface ou interface réseau public filaire ou radio, reliée au module noir.

Le système cryptographique comprend notamment un mode « chiffre » propre au traitement des informations sensibles.

Dans le mode « chiffre » :
- les informations rouges, entrant sur l'interface utilisateur, sont chiffrées par le bloc cryptographique et sortent noircies sur l'interface réseau public filaire ou radio du module noir.
- les informations entrant sur l'interface réseau public filaire ou radio sont déchiffrées par le bloc cryptographique et sortent, en clair, sur l'interface utilisateur du module rouge.

Le module de filtrage est disposé également entre le module rouge et le module noir.

Le module de filtrage applique une politique de sécurité, qui définit l'ensemble des informations noires autorisés à le traverser, du module rouge vers le module noir, et du module noir vers le module rouge.

Par exemple, les informations noires, traitées par le module rouge et à destination du module noir, sont transmises en clair via le module de filtrage. Ce dernier garantit que seules les informations noires sont transmises vers le module noir. Les informations rouges sont bloquées par le module de filtrage diminuant ainsi le risque de compromission de ces informations sur le réseau filaire ou radio.

Le comportement d'un tel module de filtrage est le plus souvent figé dans le temps, parce qu'il est implanté sous forme matérielle et/ou sous la forme d'un programme logiciel dédié. Il est donc difficile et coûteux de modifier et d'adapter le comportement du module de filtrage. Le processus de fabrication de nouveaux modules de filtrage s'avère également difficile et coûteux.

De plus, les appels au module de filtrage sont faits directement par les applications du module rouge (respectivement du module noir) et de ce fait, la politique de sécurité réellement appliquée n'est pas explicite, mais est implicitement définie par les invocations du filtre effectuées par les applications du module rouge (respectivement noir).

Le document « Policy-based management : bringing the gap », Proceedings/15th annual computer security applications conference, December 6-10, 1999, décrit une technique de traduction de règles générales pour des configurations de firewalls par exemple, à l'aide d'un compilateur.

US 2008/101222 A1 décrit un filtrage de paquets basé sur des règles utilisant des t-uplets de taille variable et stockant des paramètres définissant les règles

US 2012/036581 A1 décrit un module de sécurité positionné entre un module de traitement de données de niveau de sécurité A et un module de traitement de données de niveau de sécurité B, ce module de sécurité étant adapté pour filtrer les données entre les deux modules.

Le document « Handlung stateful Firewall Anomalies » de F. Cuppens, N Cuppens-Boulahia, J. Garcia-Alfaro, T. Moataz et X. Rimasson, décrit une procédure de validation de la cohérence des règles de filtrage d'un pare-feu à états.

La présente invention vise à proposer une solution à ces limitations.

La présente invention est définie dans les revendications 1 et 8, respectivement. Des modes de réalisations particuliers sont définis dans les revendications dépendantes.

Suivant un premier aspect, l'invention propose un procédé de définition d'un module de filtrage du type précité, caractérisé en ce qu'il comprend les étapes selon lesquelles :
- un ensemble de règles de filtrage est défini, traduisant la politique de sécurité déterminée, dans un langage apte à être compilé, lesdites règles de filtrage définissant les propriétés des informations dont la transmission est autorisée par le module de filtrage entre le premier et le second modules ;
- un traitement de validation de l'ensemble de règles défini est effectué, validant qu'une autorisation ou un refus de transmission est bien fourni par application dudit l'ensemble de règles à toute information susceptible d'être fournie en entrée du module de filtrage ;
- ledit ensemble de règles défini est compilé ;
- ledit ensemble de règles compilé est intégré dans une base de règles du module de filtrage.

Un tel procédé diminue les coûts et les efforts de travail nécessaires à la définition itérative d'un module de filtrage et à sa modification, tant au stade de sa conception qu'à un stade de maintenance pendant son fonctionnement opérationnel. Un tel procédé diminue également le risque d'erreur de conception du module de filtrage, et permet ainsi de minimiser le risque de vulnérabilités de la sécurité. Il permet en outre de diminuer la complexité et la charge de calcul nécessaires aux modifications, tant correctives qu'évolutives, d'un module de filtrage.

Dans des modes de réalisation, le procédé de définition d'un module de filtrage suivant l'invention comporte en outre une ou plusieurs des caractéristiques suivantes :
- l'ensemble de règles de filtrage définit des propriétés statiques, temporelles et dynamiques des informations autorisées à être transmises ;
- l'ensemble de règles de filtrage comporte au moins un automate protocolaire, défini par un ensemble d'états correspondant à des étapes successives de mise en oeuvre d'un protocole de communication, et d'événements provoquant des transitions entre lesdits états ;
- le module de filtrage comporte un module de traitement apte à exécuter l'ensemble de règles intégré dans la base de données de règles sur réception d'informations à filtrer et apte à autoriser ou refuser la transmission par le module de filtrage desdites informations entre les premier et deuxième modules conformément à un refus ou à une autorisation fournie suite à l'exécution dudit ensemble de règles ;
- des variables d'état associées aux règles de filtrages sont définies, et un refus ou à une autorisation est fourni suite à l'exécution dudit ensemble de règles en fonction de valeurs courantes calculées pour lesdites valeurs de variables d'état ;
- le traitement de validation de l'ensemble de règles défini comprend en outre une étape de validation de la cohérence des règles de l'ensemble de règles ;
- l'étape de validation de la cohérence des règles comprend la détection d'au moins une anomalie parmi :
   - l'existence dans l'ensemble de règles d'une première et d'une deuxième règles associées à des actions différentes, la première règle étant appliquée sur tous les objets de la deuxième ;
   - l'existence dans l'ensemble de règles de deux règles associées à des actions différentes, et chacune d'entre elles est appliquée sur un sous-ensemble des objets sur laquelle l'autre est appliquée.
   - l'existence de deux règles exécutant la même action sur les mêmes objets,
- l'ensemble de règles est défini selon une structure arborescente de règles ;
- le module de filtrage est défini de manière à ce que les informations du premier module dont la transmission est autorisée par le module de filtrage soient transmises au deuxième module en clair ;
- l'ordre d'application et la composition logique des résultats des règles est défini par l'ensemble de règles de filtrage.

Suivant un deuxième aspect, la présente invention propose un module de filtrage adapté pour filtrer des informations selon une politique de sécurité entre un premier module propre à traiter des informations sensibles, et un second module propre à traiter des informations non sensibles, lesdits premier et second modules étant reliés, en parallèle du module de filtrage, par un module cryptographique adapté pour appliquer des fonctions cryptographiques,
ledit module de filtrage étant caractérisé en ce qu'il comprend un module de traitement et une base de donnée de règles comportant un ensemble de règles définissant la politique de sécurité déterminée, dans un langage compilé, lesdites règles de filtrage définissant les propriétés des informations dont la transmission est autorisée par le module de filtrage entre le premier et le second modules.

Suivant un troisième aspect, la présente invention propose un équipement cryptographique comportant :
- un premier module propre à traiter des informations d'un premier niveau de sensibilité ;
- un second module propre à traiter des informations d'un second niveau de sensibilité distinct du premier niveau de sensibilité ;
- un module cryptographique adapté pour appliquer des fonctions cryptographiques, reliant lesdits premier et second modules ;
- un module de filtrage, adapté pour filtrer des informations selon une politique de sécurité entre le premier module et le second module.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un système cryptographique dans un mode de réalisation de l'invention ;
- la figure 2 définit un organigramme d'étapes d'un procédé de définition d'un module de filtrage dans un mode de réalisation de l'invention.

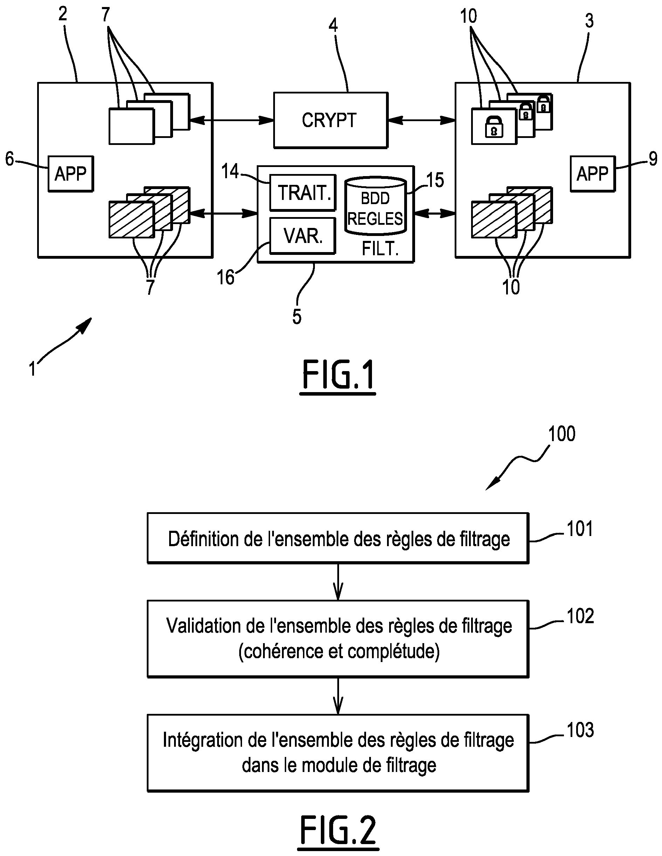

Dans un mode de réalisation de l'invention, on considère un système cryptographique, illustré sur la figure 1. Dans l'exemple considéré, le système cryptographique est un équipement cryptographique 1 du type chiffreur.

Cet équipement se caractérise par une architecture de sécurité comportant quatre modules principaux : un module 2 traitant des informations sensibles, appelé également module rouge, un module 3 traitant des informations non sensibles, appelé module noir, un module cryptographique 4 et un module de filtrage 5.

Dans un mode de réalisation, le module rouge relève d'un premier niveau de sécurité, et le module noir relève d'un deuxième niveau de sécurité, qui par exemple est inférieur au premier niveau.

Le module 2 rouge et le module 3 noir sont chacun connectés d'une part au module cryptographique 4 et d'autre part au module de filtrage 5.

Le module rouge 2 est propre à traiter, notamment à l'aide d'applications 6, des messages 7 sensibles en clair.

Le module noir 3 est propre à traiter, notamment à l'aide d'applications 9, seulement des messages non-sensibles 10, c'est-à-dire sans compromission de sécurité en cas de divulgation. Ces informations sont soit des informations en clair, intrinsèquement non-sensibles, soit des informations chiffrées, intrinsèquement sensibles mais rendues non-sensibles par chiffrement.

L'équipement cryptographique 1 est propre en outre à assurer le déchiffrement des messages transitant du module noir 3 vers le module rouge 2, en fournissant ces messages au module cryptographique 4, qui par exemple, met en oeuvre des algorithmes et des clés cryptographiques pour déchiffrer ces messages.

L'équipement cryptographique 1 est adapté en outre pour permettre la transmission de messages depuis le module noir 3 vers le module rouge 2 sans réaliser de déchiffrement, en fournissant ces messages au module de filtrage 5 et sous réserve que ces messages soient jugés, par le module de filtrage 5, comme ne portant pas atteinte à la sécurité du module rouge et que leur transmission en clair est indispensable au fonctionnement nominal de l'équipement cryptographique 1, par exemple les informations des plans de contrôle et de gestion (signalisation, routage...). En particulier, les messages non intègres (par ex. non fidèles et/ou non-authentiques, notamment, certains messages mal formés, sont détectés, puis rejetés.

L'équipement cryptographique 1 est adapté pour assurer le chiffrement des messages sensibles à transmettre depuis le module rouge 2 vers le module noir 3 en fournissant ces messages sensibles au module cryptographique 4, qui par exemple, met en oeuvre des algorithmes et des clés cryptographiques pour chiffrer ces messages.

L'équipement cryptographique 1 est adapté en outre pour permettre la transmission en clair de messages depuis le module rouge 2 vers le module noir 3 en fournissant ces messages au module de filtrage 5, et sous réserve que ces messages soient jugés, par le module de filtrage 5, non sensibles et que leur transmission en clair est indispensable au fonctionnement nominal de l'équipement cryptographique 1, par exemple les informations des plans de contrôle et de gestion (signalisation, routage...).

Le module de filtrage 5 est adapté pour déterminer si un message du module rouge 2 qu'il reçoit en entrée, peut être transmis en clair au module noir 3. Dans le cas où il a déterminé que le message pouvait être transmis au module noir 3, le module de filtrage 5 le transmet alors au module noir 3.

Similairement, le module de filtrage 5 est adapté pour déterminer si un message du module noir 3 qu'il reçoit en entrée, peut être transmis en clair au module rouge 2. Dans le cas où il a déterminé que le message pouvait être transmis au module rouge 2, le module de filtrage 5 le transmet alors au module rouge 2.

Dans le mode de réalisation considéré, le module de filtrage 5 comporte un module de traitement 14, une base de données de règles 15 invariante définissant la politique de sécurité choisie, et un bloc de variables d'états 16 comportant des valeurs courantes de variables d'états associées aux règles.

Les recommandations de sécurité en vigueur sur l'architecture des équipements cryptographiques préconisent de détourer clairement le module cryptographique 4 et le module de filtrage 5 du reste de l'équipement.

Afin d'obtenir un agrément qui autorise le déploiement de l'équipement cryptographique 1 dans une infrastructure cliente, une évaluation de sécurité est menée pour vérifier la conformité de l'équipement cryptographique 1 par rapport à des normes et recommandations de sécurité.

### Procédé de fabrication d'un module de filtrage

Selon un premier aspect, l'invention propose un procédé de fabrication 100 d'un module de filtrage similaire au module de filtrage 5 de l'équipement cryptographique 1.

Un tel procédé permet d'élaborer une politique de sécurité sous une forme qui soit applicable par un module de filtrage.

Ce procédé 100 comporte plusieurs étapes, afin de générer une base de données de règles 15, à partir d'une politique de sécurité déterminée.

Dans une première étape 101, la politique de sécurité à appliquer par le module de filtrage 5 est décrite, par la définition d'un ensemble de règles de filtrage.

Dans le mode de réalisation considéré, une ou des règles de filtrages sont définies à l'aide d'un ou des automates protocolaires.

Ces règles de filtrage, y compris les automates protocolaires, sont définies dans un langage de description flexible, déterministe et lisible.

Dans un mode de réalisation, la description de la politique de sécurité prend la forme d'un arbre, avec un élément de type racine (par exemple : l'élément « POLITIQUE »), qui comporte un ou des éléments fils de type noeud intermédiaire, dont certains à leur tour, comportent un ou des éléments fils de type noeud intermédiaire (par exemple : l'élément de type noeud intermédiaire « CHAMP » définit une propriété du message sur lequel des règles de filtrage peuvent s'appliquer), jusqu'à atteindre des éléments de type feuille (par exemple : les éléments de type feuille « FREQUENCE » et « DEBIT » constituent des règles de filtrage, stipulant des valeurs de fréquence ou débit permettant le passage du message ou imposant le rejet du message), qui n'ont pas d'éléments-fils.

Dans un mode de réalisation, deux catégories d'éléments de la politique de sécurité sont définis :
- les éléments évaluables de type « règle de filtrage », qui définissent une condition de passage du message. Cette condition permet de vérifier le message en fonction d'une propriété statique (format du message, sens de passage du message, valeur des champs d'information du message), temporelle (fréquence de passage du message, débit binaire engendré par un champ d'information) ou dynamique (automate protocolaire) donnée.
- les éléments descriptifs (par exemple « AUTOMATE », et « ETAT », « TRANSITION »), qui définissent un automate protocolaire. Un automate protocolaire se caractérise par un ensemble d'états, un ensemble de transitions entre ces états, et un état initial. Chaque état de l'automate protocolaire indique un stade particulier dans un séquencement prédéterminé de messages, échangés de manière successive entre les modules rouge et noir, conformément à un protocole de communication donné. Un tel automate protocolaire permet, par exemple, de contrôler que le passage d'un message de type « SIP REPLY », fait suite au passage d'un message de type « SIP REQUEST ».

Dans un mode de réalisation, les éléments de politique de sécurité de type « règle de filtrage » sont évaluables (individuellement), et retournent un résultat de type booléen :
- Vrai ou « A TRANSMETTRE »,
- Faux ou « A NE PAS TRANSMETTRE ».

En outre, les éléments de politique de sécurité de type « règle de filtrage » définissent l'ordre d'évaluation de leurs règles filles, et la composition logique de leurs résultats booléens, par exemple :
- Evaluation de cette règle (ET) Evaluation de la règle fille n°1 (ET) Evaluation de la règle fille n°2 (ET) ... Evaluation de la règle fille n°N
- Evaluation de cette règle (OU) Evaluation de la règle fille n°1 (OU) Evaluation de la règle fille n°2 (OU) ... Evaluation de la règle fille n°N.

Des règles de filtrage dépendent de variables d'état 16. Par exemple, une variable d'état représente un débit, un nombre d'un certain type de messages reçus par le module de filtrage, ou le moment de réception du dernier message reçu d'un type donné etc.

L'évaluation d'un élément de la politique de sécurité, de type règle de filtrage, peut engendrer la modification de variables d'états 16 associées à la politique de sécurité. Cette modification est effective, si le message est entièrement conforme à la politique de sécurité appliquée par le module de filtrage 5 (c'est à dire que toutes les règles de filtrage évaluées ont retourné VRAI ou « A TRANSMETTRE »).

Un élément, de type règle de filtrage, peut être associé à un automate protocolaire, tel que la réception d'un message donné provoque une transition d'états donnée, d'un automate protocolaire. L'évaluation d'un tel élément entraîne alors la modification d'au moins une variable d'état contenant l'état courant de cet automate protocolaire.

A titre d'exemple, un automate protocolaire simple, composé de deux états {« Idle », « Running »} et contrôlé par deux événements « Start » et « Stop » tels que la survenue de l'événement « Start » quand il est dans l'état « Idle » le fait passer à l'état « Running », et que la survenue de l'événement « Stop » quand il est dans l'état « Running » le fait passer à l'état « Idle ».

Une règle est définie par l'ensemble des objets auxquelles elle s'applique (généralement des messages vérifiant la condition définie par la règle, typiquement des propriétés de message telles qu'un sens de passage, une valeur d'un champ, une fréquence, etc), et par les actions associées qu'elle applique sur ces objets.

Ces actions sont par exemple la fourniture d'un résultat « A TRANSMETTRE » ou « A NE PAS TRANSMETTRE », et la modification des éventuelles variables d'état associées à la règle.

La ou les actions sont appliquées notamment en fonction de si le message reçu vérifie ou non la condition, i.e. si le message reçu est un objet auquel elle s'applique.

Les règles sont diverses.

Certaines des règles permettent de discriminer les formats de données autorisés des formats de données non autorisés.

Par exemple, supposons que certains des messages autorisés à être transmis par le module de filtrage par la politique de sécurité considérée, doivent être composés d'une séquence de trois champs d'information « Type », « Taille » et « Valeur », i.e. ont un format de donnée de type TLV (en anglais « Type-Length -Value »), tels que :
- le champ 'Type' doit être de taille fixe, égale à 16 bits,
- le un champ 'Taille' doit être de taille fixe, égale à 16 bits,
- le champ 'Valeur' est de taille variable, égale à la valeur du champ 'Taille' qui doit être dans la plage de bits [0, 1020].

La règle de vérification de la syntaxe d'un message énoncera ainsi les conditions définissant les messages-objets sur lesquels elle s'applique :

```
       CHAMP id='Type' taille='2'
       [...]
       CHAMP id='Taille' taille='2'
       [...]
       CHAMP id='Valeur' taille='$Taille' min='0' max='1024'
       [...]
```

où $Taille est une variable temporaire qui contient la valeur du champ dont l'identifiant (id) est 'Taille' ; [...] indique que des éléments fils peuvent en outre être définis à ce niveau, tels que des règles ou propriétés ou l'appel à des automates.

Des règles permettent de réduire les canaux cachés temporels.

Pour rappel, on entend par « canaux cachés», mis en oeuvre par les messages transmis par le module de filtrage, la transmission d'informations autres que celles transmises au sein du message lui-même, mais tels que l'information est déterminable en fonction de la fréquence d'émission de certains types de messages (canaux cachés temporels), et/ou de toutes les informations nécessaires au bon acheminement des données d'un émetteur vers un récepteur. La mise en oeuvre de canaux cachés nécessite l'existence d'un code défini entre la partie émettrice et la partie réceptrice.

Par exemple, une règle peut limiter le débit, engendré par les messages au format TLV avec un champ d'information « Valeur », à 1 koctet durant la même période fixe d'une heure (3600 secondes) et s'écrira par exemple :

```
       CHAMP id='Type' taille='2'
       [...]
       CHAMP id='Taille' taille='2'
       [...]
       CHAMP id='Valeur' taille='$Taille' min='0' max='1024'
            DEBIT max='1024o' période « 3600s' »
       [...]
```

Une variable d'état indiquant la valeur courante du débit de ce type de message et une variable d'état définissant le début de la période fixe sont notamment associées à une telle règle.

D'autres règles permettent encore d'adapter le fonctionnement du module de filtrage en fonction du protocole de communication mis en oeuvre par un message reçu en entrée du module de filtrage.

Notamment, en utilisant un poste radio tactique, un utilisateur malicieux pourrait utiliser les commutations entre le mode d'écoute et le mode d'émission pour transmettre des informations sensibles en morse, alors que sa voix est systématiquement chiffrée. La politique de sécurité pourra limiter ce canal caché en limitant le nombre de commutations de mode émission/réception par minute.

Considérons maintenant une règle contrôlant la valeur du champ d'information « Type » d'un message de format TLV, et le sens de passage, autorisé par le module de filtrage, du message pour chaque valeur de ce champ, cette politique de sécurité appliquant en outre la limite de canaux cachés temporels indiquée ci-dessus. Elle s'écrira par exemple :

```
 REGLES
     CHAMP id='Type' taille='2'
             VALEUR masque='FFFFh'
                   FIXE valeur='0100h'
                          ROUGE-VERS-NOIR
                          [...]
                   FIXE valeur='0101h'
                          ROUGE-VERS-NOIR
                          [...]
                    INTERVALLE min='0200h' max='0202h'
                          NOIR-VERS-ROUGE
                          [...]
                   FIXE valeur='0300h'
                          ROUGE-VERS-NOIR
                          [...]
                    INTERVALLE min='0400h' max='0410h'
                          NOIR-VERS-ROUGE
                          [...]
                   FIXE valeur='0500h'
                          NOIR-VERS-ROUGE
                          [...]
                   [...]
            [...]
     CHAMP id='Taille' taille='2'
            [...]
     CHAMP id='Valeur' taille='$Taille' min='0' max='1020'
            DEBIT max='1024o' période='3600s'
            [...]
```

Dans un mode de réalisation, une ou des règles de filtrage (FREQUENCE) contrôlent la fréquence de certains types de messages transmis entre les modules rouge et noir..

Par exemple, une règle impose une valeur maximale de fréquence de passage par le module de filtrage des messages du module rouge vers le module noir, dont le premier champ d'information, de taille 2 octets, prend la valeur 100h (valeur hexadécimale).

La période minimale entre deux transmissions de deux messages de ce type est par exemple de 10 s.

Cette règle peut s'écrire :

```
      REGLE
            CHAMP taille='2'
                   VALEUR masque='FFFFh'
                          FIXE valeur='100h'
                                  ROUGE-VERS-NOIR
                                  FREQUENCE periode='10s'
```

Cette disposition permet de limiter l'existence de canaux cachés.

Le module de filtrage est défini de telle sorte que tout message non explicitement déclaré dans la base de données de règles comme « A TRANSMETTRE », est par défaut déclaré comme « « A NE PAS TRANSMETTRE ».

Dans une étape 102, la cohérence et la complétude de l'ensemble des règles de filtrage ainsi défini sont vérifiées.

Dans des modes de réalisation, cette vérification est réalisée par un processus de relecture par une personne, ou automatisée, ce qui est particulièrement adapté lorsque l'on dispose d'une sémantique de cohérence décidable ou semi-décidable.

L'ensemble de règles est considéré comme vérifiant le critère de cohérence si aucune règle de l'ensemble des règles défini à l'étape 101 n'engendre d'anomalies avec une autre règle. Notamment, si l'on suit une logique déontique, aucune des anomalies nommées ci-dessous A1 à A4 ne doit être autorisée.

Anomalie de généralisation A1 : une règle est une généralisation d'une autre, si elles ont des actions différentes et la première règle est appliquée aussi sur tous les objets de la deuxième, (si deux règles R1, respectivement R2, sont candidates à application à un ensemble de messages E1, respectivement E2), que les actions associées sont différentes et E1 est inclus dans E2, il y a anomalie car il est alors impossible de décider quelle règle doit s'appliquer).

Anomalie de recouvrement A2 : une règle est recouverte quand une règle précédente est appliquée sur tous ses objets, sachant que les deux règles ont des actions différentes.

Anomalie de corrélation A3 : deux règles, avec des actions différentes, sont corrélées si chacune d'entre elles est aussi appliquée sur un sous-ensemble des objets sur laquelle l'autre est appliquée.

Anomalie de redondance A4 : une règle est redondante si elle exécute la même action sur les mêmes objets qu'une autre règle.

L'ensemble de règles est considéré comme vérifiant le critère de complétude s'il est démontré que les règles de l'ensemble de règles défini à l'étape 101 sont à même de filtrer tous les messages susceptibles d'être fourni en entrée du module de filtrage. Dans un mode de réalisation, l'ensemble de règles est considéré comme vérifiant le critère de complétude si en outre, inversement, toutes les règles sont utilisées.

Si l'ensemble de règles ne vérifie pas le critère de complétude ou de cohérence, sa définition est revue de manière à ce que ces critères soient vérifiés.

Dans des modes de réalisation, seuls certains des critères ou certains axes de ces critères sont vérifiés.

Dans une étape 103, l'ensemble des règles de filtrage ainsi défini, comprenant les automates protocolaires et représentant la politique de sécurité choisie, et dont la complétude et la cohérence ont été validées, est compilé, de manière à le rendre lisible et exploitable directement par le bloc de traitement 14.

L'ensemble des règles ainsi compilé, est enregistré dans une base de données de règles 15, élément du module de filtrage 5. Les variables d'état associées à la politique de sécurité, sont également stockées dans un bloc 16 de variables d'état du module de filtrage.

La base de données de règles 15 et le bloc 16 de variables d'état sont adaptées pour opérer en collaboration avec un bloc de traitement 14

Suivant les modes de réalisation de l'invention, tout ou partie des étapes du procédé 100 sont mises en oeuvre suite à l'exécution, sur des moyens de calcul, d'instructions logicielles d'un programme d'ordinateur de définition d'un module de filtrage dans un mode de réalisation de l'invention.

Dans une étape 104 (non représentée), la politique de sécurité est appliquée, par la mise en oeuvre opérationnelle du module de filtrage 5, sur des messages qui lui sont fournis.

### Module de filtrage

Selon un deuxième aspect, l'invention propose un module de filtrage, par exemple similaire au module de filtrage 5 de l'équipement cryptographique 1.

Dans ce module de filtrage 5, la base de données de règles 15, obtenue à l'issue du procédé 100 par la compilation de la politique de sécurité, est stockée.

Dans le bloc de variables d'états 16, les valeurs des variables d'états définies an association avec les règles lors de la mise en oeuvre du procédé 100 sont initialisées.

Le bloc de traitement 14 est adapté pour, suite à la réception d'un message en provenance du module rouge 2, procéder à l'évaluation des règles de filtrage définies dans la base de règles 15, pour autoriser son transfert vers le module noir 3.

Le bloc de traitement 14 est adapté pour, suite à la réception d'un message en provenance du module noir 3, procéder à l'évaluation des règles de filtrage définies dans la base de règles 15, pour autoriser son transfert vers le module rouge 2.

Le bloc de traitement 14, plus précisément, évalue la règle de filtrage racine définie dans la base de données des règles 15, suite à la réception d'un message.

L'évaluation de la règle de filtrage racine, entraine l'évaluation de ses règles filles. De manière récursive, l'évaluation des règles filles entraine l'évaluation de tout ou partie de l'arbre de règles de filtrage constituant la base de données de règles 15.

Les valeurs des variables d'état dans le bloc de variables d'état 16 sont mises à jour au fil de l'application des règles de la politique de sécurité, sur les messages contrôlés par le module de filtrage pendant son fonctionnement opérationnel.

Notamment l'évaluation d'une règle de filtrage peut entrainer la modification de la valeur courante d'une ou plusieurs variables d'états. Les variables d'état ne sont pas modifiées immédiatement de manière à préserver la cohérence des variables d'état pendant l'application de la politique de sécurité sur le message. Lorsque l'évaluation des règles de filtrage est terminée et si toutes les règles de filtrage évaluées ont retourné VRAI ou A TRANSMETTRE, alors le bloc de traitement 14, procède à la mise à jour des variables d'état modifiées par les règles de filtrage évaluées.

On notera que lors du fonctionnement opérationnel du module de filtrage 5, la base de règles 15 est invariante, alors que les valeurs des variables d'état du bloc de variables d'état 16 sont mises à jour au fil de l'application des règles sur les messages.

La solution proposée consiste à baser l'architecture du module de filtrage sur trois parties principales, qui sont le bloc de traitement, la base de données de règles et le bloc des variables d'état 16. La politique de sécurité est entièrement définie et paramétrée dans la base de données de règles par les règles de filtrage associées à des automates. L'application de ces règles est déterminée par le bloc de traitement 14 dont le comportement peut être figé. Cette séparation de l'application de la politique de sécurité et de sa définition facilite la mise en oeuvre de modifications de la politique de sécurité.

L'invention est caractérisée par :
- cette implantation de la politique de sécurité du filtrage sous forme de règles, ces règles permettant de contrôler les propriétés statiques, temporelles et dynamiques des messages autorisés à passer à travers le module de filtrage.
- la séparation de la conception, du développement et de la sécurisation de la politique de sécurité de son application ;
- l'intégration retardée des règles dans le module de filtrage.

Dès lors, l'invention permet de configurer les politiques de sécurité au sein du module de filtrage, au lieu de les implanter par un codage en dur

L'invention permet ainsi de répondre aux limitations des modules de filtrage de l'art antérieur quant à leur manque de capacités d'évolution : en effet, selon l'invention, pour modifier le comportement du module de filtrage, il suffit de modifier la politique de sécurité, puis de la compiler et de la charger dans le module de filtrage sous la forme d'une base de données de règles, sans modification du bloc de traitement. Par ailleurs, l'invention permet en outre de disposer d'un module de filtrage au comportement adaptatif. De même, le bloc de traitement pourra être identique dans des modules de filtrage de niveaux de confidentialité différents et/ou appliquant des politiques de sécurité différentes, seules les bases de règles différeront.

Les avantages de la solution proposée sont présents pendant toute la vie du module de filtrage.

En effet, durant le développement, elle permet de répondre au besoin des configurations changeantes durant le développement et elle autorise une intégration quasi-continue du module de filtrage.

Durant la certification/qualification de l'équipement, elle fournit une garantie élevée et la preuve de la cohérence et de la complétude des règles. Elle effectue une implantation rigoureuse d'un langage adapté, permet de décorréler le processus de conception du module de filtrage, du processus de conception des politiques de sécurité (100). Elle permet de gérer le compromis efficacité/sécurité de manière souple en adaptant la définition de la politique de sécurité au besoin de sécurité (niveau d'agrément de l'équipement cryptographique).

L'invention a été décrite ci-dessus en référence à un chiffreur. Néanmoins, elle peut être mise en oeuvre pour tout module de filtrage dans un système avec des domaines D1 et D2, de niveaux de confidentialité distincts N1 et N2 respectivement, notamment lorsqu'il est requis de communiquer entre D1 et D2, des informations de niveau N2.

Un tel module de filtrage selon l'invention peut ainsi être implémenté dans des systèmes de pare-feu, de passerelle de sécurité, d'équipements multi-niveaux de sécurité tels que des terminaux, des serveurs, des diodes, des chiffreurs, des routeurs etc.

Dans le cas de l'équipement cryptographique 1, les informations considérées telles que décrites sont des messages dans les plans de contrôle et de gestion (exemple : information de routage et de qualité de service). Néanmoins, dans d'autres modes de réalisation, les informations sont des données autres que des messages dans les plans de contrôle et de gestion, à transmettre entre les modules noir et rouge.

Dans le mode de réalisation considéré, l'ensemble de règles est organisé selon une structure arborescente. Dans d'autres modes de réalisation, l'ensemble de règles est structuré différemment, par exemple sous forme de liste de règles à enchaîner. Ce qui importe, c'est que l'ordre selon lequel le module de traitement doit prendre en compte toutes les règles entre elles lui soit fourni par la base de données.

## Revendications

1. Procédé de définition (100) d'un module de filtrage (5) adapté pour filtrer des informations, conformément à une politique de sécurité déterminée, entre un premier module (2) propre à traiter des informations d'un premier niveau de sensibilité, et un second module (3) propre à traiter des informations d'un second niveau de sensibilité distinct du premier niveau de sensibilité, lesdits premier et second modules étant reliés, en parallèle du module de filtrage, par un module cryptographique (4) adapté pour appliquer des fonctions cryptographiques, le procédé comprenant les étapes selon lesquelles :
- un ensemble de règles de filtrage est défini (101), traduisant la politique de sécurité déterminée, dans un langage apte à être compilé, lesdites règles de filtrage définissant les propriétés des informations dont la transmission est autorisée par le module de filtrage (5) entre le premier et le second modules ;
- ledit ensemble de règles défini est compilé (103);
- ledit ensemble de règles compilé est intégré dans une base (15) de règles du module de filtrage ;
ledit procédé étant **caractérisé en ce que** :
- un traitement de validation de l'ensemble de règles défini est effectué (102), validant qu'une autorisation ou un refus de transmission est bien fourni par application dudit l'ensemble de règles à toute information susceptible d'être fournie en entrée du module de filtrage ; et **en ce que**
- l'ensemble de règles de filtrage comporte au moins un automate protocolaire, défini par un ensemble d'états correspondant à des étapes successives de mise en oeuvre d'un protocole de communication, et d'événements provoquant des transitions entre lesdits états, l'ensemble de règles de filtrage définissant des propriétés statiques, temporelles et dynamiques des informations autorisées à être transmises,
le traitement de validation de l'ensemble de règles défini comprenant en outre une étape de validation de la cohérence des règles de l'ensemble de règles,
l'étape de validation de la cohérence des règles comprenant la détection d'au moins une anomalie parmi :
- l'existence dans l'ensemble de règles d'une première et d'une deuxième règles associées à des actions différentes, la première règle étant appliquée sur tous les objets de la deuxième ;
- l'existence dans l'ensemble de règles de deux règles associées à des actions différentes, et chacune d'entre elles est appliquée sur un sous-ensemble des objets sur laquelle l'autre est appliquée, et
- l'existence de deux règles exécutant la même action sur les mêmes objets.

2. Procédé de définition (100) d'un module de filtrage (5) selon la revendication 1, selon lequel l'ensemble de règles de filtrage comporte des règles de vérification des formats de messages, chaque état indiquant un stade particulier dans un séquencement prédéterminé de messages.

3. Procédé de définition d'un module de filtrage (5) selon la revendication 1 ou 2, selon lequel le module de filtrage comporte un module de traitement (14) apte à exécuter l'ensemble de règles intégré dans la base de données (15) de règles sur réception d'informations à filtrer et apte à autoriser ou refuser la transmission par le module de filtrage desdites informations entre les premier (2) et deuxième (3) modules conformément à un refus ou à une autorisation fournie suite à l'exécution dudit ensemble de règles.

4. Procédé de définition d'un module de filtrage (5) selon la revendication 3, selon lequel des variables d'état (16) associées aux règles de filtrages sont définies, et un refus ou à une autorisation est fourni suite à l'exécution dudit ensemble de règles en fonction de valeurs courantes calculées pour lesdites valeurs de variables d'état.

5. Procédé de définition d'un module de filtrage (5) selon l'une quelconque des revendications précédentes, selon lequel l'ensemble de règles est défini selon une structure arborescente de règles.

6. Procédé de définition d'un module de filtrage (5) selon l'une quelconque des revendications précédentes, selon lequel le module de filtrage est défini de manière à ce que les informations du premier module (2) dont la transmission est autorisée par le module de filtrage soient transmises au deuxième module (3) en clair.

7. Procédé de définition d'un module de filtrage (5) selon l'une quelconque des revendications précédentes, selon lequel l'ordre d'application et la composition logique des résultats des règles est défini par l'ensemble de règles de filtrage.

8. Module de filtrage (5) adapté pour filtrer des informations selon une politique de sécurité entre un premier module (2) propre à traiter des informations sensibles, et un second module (3) propre à traiter des informations non sensibles, lesdits premier et second modules étant reliés, en parallèle du module de filtrage, par un module cryptographique (4) adapté pour appliquer des fonctions cryptographiques,
ledit module de filtrage comprenant un module de traitement (14) et une base (15) de donnée de règles comportant un ensemble de règles de filtrage définissant la politique de sécurité déterminée, dans un langage compilé, lesdites règles de filtrage définissant les propriétés des informations dont la transmission est autorisée par le module de filtrage (5) entre le premier et le second modules ;
ledit module de filtrage étant **caractérisé en ce que** l'ensemble de règles de filtrage-comporte au moins un automate protocolaire, défini par un ensemble d'états correspondant à des étapes successives de mise en oeuvre d'un protocole de communication, et d'événements provoquant des transitions entre lesdits états, l'ensemble de règles de filtrage définissant des propriétés statiques, temporelles et dynamiques des informations autorisées à être transmises,
un traitement de validation de l'ensemble de règles défini étant effectué, le traitement de validation de l'ensemble de règles défini comprenant en outre une étape de validation de la cohérence des règles de l'ensemble de règles,
l'étape de validation de la cohérence des règles comprenant la détection d'au moins une anomalie parmi :
- l'existence dans l'ensemble de règles d'une première et d'une deuxième règles associées à des actions différentes, la première règle étant appliquée sur tous les objets de la deuxième ;
- l'existence dans l'ensemble de règles de deux règles associées à des actions différentes, et chacune d'entre elles est appliquée sur un sous-ensemble des objets sur laquelle l'autre est appliquée, et
- l'existence de deux règles exécutant la même action sur les mêmes objets.

9. Module de filtrage (5) selon la revendication 8, dans lequel l'ensemble de règles de filtrage comporte des règles de vérification des formats de messages, chaque état indiquant un stade particulier dans un séquencement prédéterminé de messages.

10. Module de filtrage selon la revendication 8 ou 9, dans lequel l'ensemble de règles intégré dans la base de données de règles est issu d'un procédé selon l'une des revendications 1 à 7.

11. Equipement cryptographique comportant :
- un premier module (2) propre à traiter des informations d'un premier niveau de sensibilité ;
- un second module (3) propre à traiter des informations d'un second niveau de sensibilité distinct du premier niveau de sensibilité ;
- un module cryptographique (4) adapté pour appliquer des fonctions cryptographiques, reliant lesdits premier et second modules ;
- un module de filtrage (5) selon l'une des revendications 8 à 10, adapté pour filtrer des informations selon une politique de sécurité entre le premier module (2) et le second module (3).

## Patentansprüche

1. Verfahren zum Definieren (100) eines Filtermoduls (5), eingerichtet zum Filtern von Informationen gemäß einer festgelegten Sicherheitspolitik zwischen einem ersten Modul (2), geeignet zum Verarbeiten von Informationen eines ersten Sensibilitätsniveaus, und einem zweiten Modul (3), geeignet zum Verarbeiten von Informationen eines zweiten Sensibilitätsniveaus, das von dem ersten Sensibilitätsniveau unterschiedlich ist, wobei das erste und zweite Modul miteinander parallel zu dem Filtermodul durch ein kryptographisches Modul (4), geeignet zum Anwenden kryptographischer Funktionen, verbunden sind, wobei das Verfahren die Schritte aufweist gemäß denen:
- eine Menge von Filterregeln definiert wird (101), die die festgelegte Sicherheitspolitik in eine Sprache, die dazu geeignet ist, kompiliert zu werden, übersetzt, wobei die Filterregeln die Eigenschaften der Informationen definieren, deren Übertragung zwischen dem ersten und dem zweiten Modul durch das Filtermodul (5) autorisiert wird;
- die definierte Menge von Regeln kompiliert wird (103);
- die kompilierte Menge von Regeln in eine Regeldatenbank (15) des Filtermoduls integriert wird;
Wobei das Verfahren dadurch charakterisiert ist, dass:
- eine Validierungsverarbeitung der definierten Menge von Regeln durchgeführt wird (102), wobei validiert wird, dass eine Übertragungs-Autorisation oder -Ablehnung durch Anwendung der Menge von Regeln auf die gesamte Information, die am Eingang des Filtermoduls bereitgestellt werden kann, tatsächlich geliefert wird; und dadurch, dass
- die Menge von Filterregeln mindestens einen Protokollautomat aufweist, definiert durch eine Menge von Zuständen, die sukzessiven Schritten zum Ausführen eines Kommunikationsprotokolls entsprechen, und von Ereignissen, die Übergänge zwischen den Zuständen herbeiführen,
wobei die Menge von Filterregeln statische, temporäre und dynamische Eigenschaften der Informationen, die autorisiert sind, übertragen zu werden, definieren,
wobei die Validierungsverarbeitung der definierten Menge von Regeln außerdem einen Schritt der Validierung der Kohärenz der Regeln der Menge von Regeln aufweist,
wobei der Schritt der Validierung der Kohärenz der Regeln die Detektion mindestens einer Anomalie aufweist von:
- Der Existenz in der Menge von Regeln einer ersten und einer zweiten Regel, die unterschiedlichen Aktionen zugeordnet sind, wobei die erste Regel auf alle Objekte der zweiten angewendet wird;
- Der Existenz in der Menge von Regeln von zwei Regeln, die unterschiedlichen Aktionen zugeordnet sind und jede von ihnen wird auf eine Teilmenge der Objekte, auf die die andere angewendet wird, angewendet, und
- Der Existenz von zwei Regeln, die dieselbe Aktion auf denselben Objekten ausführen.

2. Verfahren zum Definieren (100) eines Filtermoduls (5) gemäß Anspruch 1, gemäß dem die Menge von Filterregeln Regeln zur Verifikation von Nachrichtenformaten aufweist, wobei jeder Zustand ein bestimmtes Stadium in einer vorgegebenen Nachrichtensequenzierung angibt.

3. Verfahren zum Definieren eines Filtermoduls (5) gemäß Anspruch 1 oder 2, gemäß dem das Filtermodul ein Verarbeitungsmodul (14) aufweist, geeignet zum Ausführen der in die Regeldatenbank (15) integrierten Menge von Regeln bei Empfang zu filternder Informationen und geeignet zum Autorisieren oder Ablehnen der Übertragung der Informationen zwischen dem ersten (2) und zweiten (3) Modul durch das Filtermodul gemäß einer Ablehnung oder einer Autorisation, bereitgestellt im Anschluss an eine Ausführung der Menge von Regeln.

4. Verfahren zum Definieren eines Filtermoduls (5) gemäß Anspruch 3, gemäß dem die Zustandsvariablen (16), die den Filterregeln zugeordnet sind, definiert werden und eine Ablehnung oder eine Autorisation im Anschluss an eine Ausführung der Menge von Regeln abhängig von für die Werte der Zustandsvariablen berechneten aktuellen Werten bereitgestellt wird.

5. Verfahren zum Definieren eines Filtermoduls (5) gemäß einem der vorhergehenden Ansprüche, gemäß dem die Menge von Regeln gemäß einer Regelbaumstruktur definiert wird.

6. Verfahren zum Definieren eines Filtermoduls (5) gemäß einem der vorhergehenden Ansprüche, gemäß dem das Filtermodul derart definiert wird, dass die Informationen des ersten Moduls (2), deren Übertragung durch das Filtermodul autorisiert wird, in Klartext an das zweite Modul (3) übertragen werden.

7. Verfahren zum Definieren eines Filtermoduls (5) gemäß einem der vorhergehenden Ansprüche, gemäß dem die Reihenfolge der Anwendung und die logische Zusammensetzung der Ergebnisse der Regeln durch die Menge von Filterregeln definiert werden.

8. Filtermodul (5), eingerichtet zum Filtern von Informationen gemäß einer Sicherheitspolitik zwischen einem ersten Modul (2), geeignet zum Verarbeiten von sensiblen Informationen, und einem zweiten Modul (3), geeignet zum Verarbeiten von nicht-sensiblen Informationen, wobei das erste und zweite Modul miteinander parallel zu dem Filtermodul durch ein kryptographisches Modul (4), geeignet zum Anwenden kryptographischer Funktionen, verbunden sind,
wobei das Filtermodul ein Verarbeitungsmodul (14) und eine Regeldatenbank (15), aufweist, die eine Menge von Filterregeln, die die festgelegte Sicherheitspolitik definiert, in einer kompilierten Sprache aufweist, wobei die Filterregeln die Eigenschaften der Informationen definieren, deren Übertragung zwischen dem ersten und dem zweiten Modul durch das Filtermodul (5) autorisiert wird;
wobei das Filtermodul dadurch charakterisiert ist, dass die Menge von Filterregeln mindestens einen Protokollautomat aufweist, definiert durch eine Menge von Zuständen, die sukzessiven Schritten zum Ausführen eines Kommunikationsprotokolls entsprechen, und von Ereignissen, die Übergänge zwischen den Zuständen herbeiführen,
wobei die Menge von Filterregeln statische, temporäre und dynamische Eigenschaften der Informationen, die autorisiert sind, übertragen zu werden, definieren,
wobei eine Validierungsverarbeitung der definierten Menge von Regeln durchgeführt wird, wobei die Validierungsverarbeitung der definierten Menge von Regeln außerdem einen Schritt der Validierung der Kohärenz der Regeln der Menge von Regeln aufweist,
wobei der Schritt der Validierung der Kohärenz der Regeln die Detektion mindestens einer Anomalie aufweist von:
- Der Existenz in der Menge von Regeln einer ersten und einer zweiten Regel, die unterschiedlichen Aktionen zugeordnet sind, wobei die erste Regel auf alle Objekte der zweiten angewendet wird;
- Der Existenz in der Menge von Regeln von zwei Regeln, die unterschiedlichen Aktionen zugeordnet sind und jede von ihnen wird auf eine Teilmenge der Objekte, auf die die andere angewendet wird, angewendet, und
- Der Existenz von zwei Regeln, die dieselbe Aktion auf denselben Objekten ausführen.

9. Filtermodul (5) gemäß Anspruch 8, in dem die Menge von Filterregeln Regeln zur Verifikation von Nachrichtenformaten aufweist, wobei jeder Zustand ein bestimmtes Stadium in einer vorgegebenen Nachrichtensequenzierung angibt.

10. Filtermodul (5) gemäß Anspruch 8 oder 9, in dem die Menge von in der Regeldatenbank integrierten Regeln von einem Verfahren gemäß einem der Ansprüche 1 bis 7 ausgegeben wird.

11. Kryptographische Einrichtung aufweisend:
- ein erstes Modul (2), geeignet zum Verarbeiten von Informationen eines ersten Sensibilitätsniveaus;
- ein zweites Modul (3), geeignet zum Verarbeiten von Informationen eines zweiten Sensibilitätsniveaus, das unterschiedlich von dem ersten Sensibilitätsniveau ist;
- ein kryptographisches Modul (4), geeignet zum Anwenden kryptographischer Funktionen, das das erste und das zweite Modul verbindet;
- ein Filtermodul (5) gemäß einem der Ansprüche 8 bis 10, geeignet zum Filtern von Informationen gemäß einer Sicherheitspolitik zwischen dem ersten Modul (2) und dem zweiten Modul (3).

## Claims

1. Method (100) for defining a filtering module (5) suitable for filtering information, according to a predetermined security policy, between a first module (2) adapted for processing information with a first sensitivity level, and a second module (3) adapted for processing information with a second sensitivity level distinct from the first sensitivity level, said first and second modules being connected, in parallel with the filtering module, by a cryptographic module (4) suitable for applying cryptographic functions, the method being comprising the following steps:
- a set of filtering rules is defined (101), translating the predetermined security policy, in a compilable language, said filtering rules defining the properties of the information whereof transmission is allowed by the filtering module (5) between the first and second modules;
- said predefined set of rules is compiled (103);
- said compiled set of rules is integrated into a rules database (15) of the filtering module said method being **characterized in that**:
- validation processing for the predefined set of rules is carried out (102), validating that a transmission authorization or refusal has in fact been provided by applying said set of rules to any information that may be provided at the input of the filtering module; and **in that**
- the set of filtering rules includes at least one protocol automaton, defined by a set of states corresponding to successive steps of the implementation of a communication protocol, and events causing transitions between said states,
the set of filtering rules defining static, time and dynamic properties of the information authorized to be transmitted,
the validation processing for the predefined set of rules further comprises a step for validating the coherence of the rules of said set of rules,
the step for validating the coherence of the rules comprises detecting at least one anomaly from among:
- the existence in the set of rules of first and second rules associated with different actions, the first rule being applied on all of the objects of the second;
- the existence in the set of rules of two rules associated with different actions, and each of them is applied on a subset of the objects to which the other is applied;
- the existence of two rules executing the same action on the same objects.

2. Method for defining (100) a filtering module (5) according to claim 1, according to which the set of filtering rules includes rules for checking message formats, each state indicating a particular stage in a predetermined sequence of messages.

3. Method for defining a filtering module (5) according to claim 1 or 2, wherein the filtering module includes a processing module (14) adapted for executing all of the rules integrated into the rules database (15) upon receipt of information to be filtered and adapted for allowing or refusing transmission by the filtering module of said information between the first (2) and second (3) modules according to a refusal or an authorization provided following the execution of said set of rules.

4. Method for defining a filtering module (5) according to claim 3, wherein state variables (16) associated with the filtering rules are defined, and a refusal or authorization is provided following the execution of said set of rules as a function of current values calculated for said state variable values.

5. Method for defining a filtering module (5) according to any one of the preceding claims, wherein the set of rules is defined according to a rules tree structure.

6. Method for defining a filtering module (5) according to any one of the preceding claims, wherein the filtering module is defined such that the information from the first module (2) whereof transmission is authorized by the filtering module is transmitted to the second module (3) in clear.

7. Method for defining a filtering module (5) according to any one of the preceding claims, wherein the application order and logic composition of the results of the rules is defined by the set of filtering rules.

8. Filtering module (5) suitable for filtering information according to a security policy between a first module (2) adapted for processing sensitive information, and a second module (3) adapted for processing non-sensitive information, said first and second modules being connected, in parallel with the filtering module, by a cryptographic module (4) suitable for applying cryptographic functions,
said filtering module comprising a processing module (14) and a rules database (15) including a set of rules defining the predetermined security policy, in a compiled language, said filtering rules defining the properties of the information whereof transmission is authorized by the filtering module (5) between the first and second modules;
said filtering module being **characterized in that** the set of filtering rules includes at least one protocol automaton, defined by a set of states corresponding to successive steps of the implementation of a communication protocol, and events causing transitions between said states,
the set of filtering rules defining static, time and dynamic properties of the information authorized to be transmitted,
validation processing for the predefined set of rules being carried out, the validation processing for the predefined set of rules further comprising a step for validating the coherence of the rules of said set of rules,
the step for validating the coherence of the rules comprises detecting at least one anomaly from among:
- the existence in the set of rules of first and second rules associated with different actions, the first rule being applied on all of the objects of the second;
- the existence in the set of rules of two rules associated with different actions, and each of them is applied on a subset of the objects to which the other is applied;
- the existence of two rules executing the same action on the same objects.

9. Filtering module according to claim 8, wherein the set of filtering rules includes rules for checking message formats, each state indicating a particular stage in a predetermined sequence of messages.

10. Filtering module according to claim 8 or 9, wherein the set of rules integrated into the rules database results from a method according to one of claims 1 to 7.

11. Cryptographic equipment including:
- a first module (2) adapted for processing information with a first sensitivity level;
- a second module (3) adapted for processing information with a second sensitivity level different from the first sensitivity level;
- a cryptographic module (4) suitable for applying cryptographic functions, connecting said first and second modules;
- a filtering module (5) according to one of claims 8 to 10, suitable for filtering information according to a security policy between the first module (2) and the second module (3).
